# EUROPÄISCHE PATENTSCHRIFT

(11) **EP 1 272 084 B1**
(45) Veröffentlichungstag und Bekanntmachung des Hinweises auf die Patenterteilung: **10.09.2003**
(21) Anmeldenummer: 01915293.3
(22) Anmeldetag: 22.02.2001
(51) Int. Cl.: A47J 43/08

(54) **KÜCHENMASCHINE**
KITCHEN MACHINE
ROBOT DE CUISINE

(30) Priorität: 31.03.2000 DE 10016292
(43) Veröffentlichungstag der Anmeldung: 08.01.2003
(73) Patentinhaber: BSH Bosch und Siemens Hausgeräte GmbH, 81669 München (DE)
(72) Erfinder: ZIBRET, Igor, 3327 Smartno ob Paki (SI); PAVLOVIC, Henrik, 3333 Ljubno (SI); PESEC, Jurij, 3301 Petrovce (SI)
(86) Internationale Anmeldenummer: EP0102056
(87) Internationale Veröffentlichungsnummer: WO01074219

(56) Entgegenhaltungen:
- US-A- 5 524 530
- US-A- 5 979 806

## Beschreibung

Die Erfindung betrifft eine Küchenmaschine mit zwei an ihrem Gehäuse räumlich beabstandet angeordneten Ankoppelstellen für Bearbeitungsgeräte, wobei an jeder Ankoppelstelle eine vom Antriebsmotor der Küchenmaschine angetriebene Abtriebswelle vorgesehen ist, bei welcher Küchenmaschine ferner an deren Gehäuse ein mit einem im Stromkreis des Antriebsmotors liegenden Schalter gekoppeltes Betätigungselement vorgesehen ist (vgl US-A-5 979 806).

Bei einer solchen auf dem Markt befindlichen Küchenmaschine sind an einem waagerechten Sockelteil des Gehäuses der Küchenmaschine eine Ankoppelstelle für eine Rührschüssel und an einem senkrecht verlaufenden und den Antriebsmotor enthaltenden Gehäuseteil eine axial über dem Antriebsmotor liegende weitere Ankoppelstelle vorgesehen. Dabei ist an jeder Ankoppelstelle das Ende einer Abtriebswelle zum Ankoppeln des Arbeitswerkzeuges des jeweiligen Bearbeitungsgerätes frei zugänglich. Ist nur an einer Ankoppelstelle oder an keiner der Ankoppelstellen ein Bearbeitungsgerät aufgesetzt, besteht eine hohe Verletzungsgefahr, wenn der Antriebsmotor der Küchenmaschine eingeschaltet wird.

Der Erfindung liegt die Aufgabe zugrunde, eine Küchenmaschine der eingangs beschriebenen Art so auszubilden, dass die Küchenmaschine nicht in Betrieb gesetzt werden kann, wenn eine der Ankoppelstellen nicht abgedeckt ist.

Die Lösung der gestellten Aufgabe gelingt nach der Erfindung dadurch, dass zusätzlich zu dem Schalter im Stromkreis des Antriebsmotors zwei in Reihe liegende Schaltkontakte vorgesehen sind, von denen der eine direkt oder indirekt durch das Aufsetzen eines Bearbeitungsgerätes oder Abdeckteiles auf die eine Ankoppelstelle und der andere Schaltkontakt direkt oder indirekt durch das Aufsetzen eines Bearbeitungsgerätes oder eines Abdeckteiles auf die andere Ankoppelstelle in seine Schließstellung umschaltbar ist. Der Stromkreis des Antriebsmotors ist somit nur dann durch den Schalter schließbar, wenn an beiden Ankoppelstellen entweder ein Bearbeitungsgerät oder ein Abdeckteil aufgesetzt ist. Damit ist im eingeschalteten Zustand der Küchenmaschine keine der Abtriebswellen mehr frei zugänglich, so dass auch keine Verletzungsgefahr mehr besteht.

Dadurch, dass die beiden Schaltkontakte auf einer verschwenkbaren, durch Krafteinwirkung in ihrer Ruhelage gehaltenen Platine angeordnet sind, auf welche Platine beim Aufsetzten eines Bearbeitungsgerätes oder Abdeckteiles auf die eine oder andere Ankoppelstelle eine die Umschaltung des einen oder anderen Schaltkontaktes bewirkende Verschwenkbewegung ausgeübt ist, braucht der betreffende Schaltkontakt nicht unmittelbar durch ein aufzusetzendes Bearbeitungsgerät oder Abdeckteil betätigt zu werden. Dadurch besteht bei der konstruktiven Ausgestaltung mehr Freiraum.

Die Umschaltung des jeweils anderen, durch die Platinenverschwenkung nicht betätigten Schaltkontaktes gelingt dadurch, dass die beiden Schaltkontakte mit einem Schaltstößel gekoppelt sind, der mit seinem einen Ende an der Platine festgelegt ist und auf dessen anderes Ende beim Aufsetzen eines Bearbeitungsgerätes oder Abdeckteiles auf die eine oder andere Ankoppelstelle eine Schaltbewegung ausgeübt ist.

Bei einer Küchenmaschine mit aufsetzbarer Rührschüssel ist es vorteilhaft, wenn an dem Deckel der Rührschüssel als Verstellorgan eine nach radial außen ragende Lasche ausgebildet ist, die durch eine entsprechende Drehbewegung des Deckels in einen an einem senkrecht verlaufenden Gehäuseteil der Küchenmaschine vorgesehenen Schlitz einschwenkbar ist, welche Lasche direkt oder indirekt auf den Schaltstößel der beiden Schaltkontakte im Sinne einer Umschaltung des einen Schaltkontaktes einwirkt.

Dadurch, dass im Inneren des Gehäuses benachbart zu dem Schlitz ein mindestens einen Hebelarm aufweisendes durch die Lasche verschwenkbares Sperrglied angeordnet ist, dessen Hebelarm auf den Schaltstößel einwirkt, können auch größere, durch konstruktive Gegebenheiten bedingte Abstände zwischen der Lasche und dem Schaltstößel überbrückt werden.

Die zum Umschalten des anderen Schaltkontaktes notwendige Verschwenkung der Platine erfolgt zweckmäßigerweise beim Aufsetzen eines Bearbeitungsgerätes oder Abdeckteiles auf die andere Ankoppelstelle. Dabei wird die Verschwenkung der Platine auf einfache Weise dadurch erreicht, dass direkt an der Platine oder an einem mit dieser verbundenen Teil eine Anlaufschräge vorgesehen ist, auf die beim Aufsetzen eines Bearbeitungsgerätes oder Abdeckteiles eine Verschwenkkraft ausgeübt ist.

Größere, konstruktiv bedingte Abstände zwischen der Anlaufschräge und dem mit ihr zusammenwirkenden Bearbeitungsgerät oder Abdeckteil lassen sich dadurch überbrükken, dass ein auf der Anlaufschräge aufruhendes Zwischenglied vorgesehen ist, welches beim Aufsetzen des Bearbeitungsgerätes oder des Abdeckteiles niederdrückbar ist.

Die Platine wird zweckmäßigerweise durch eine Feder in ihrer Ruhelage gehalten bzw. in diese zurückgestellt, sobald durch Abnehmen des Bearbeitungsgerätes oder Abdeckteiles von der betreffenden Ankoppelstelle der Rückstellweg freigegeben ist. Durch die zwangsläufig erfolgende Rückstellung der Platine wird der betreffende Schaltkontakt wieder in seine Offenstellung geschaltet und damit der Stromkreis des Antriebsmotors unterbrochen. Damit ist sicher gestellt, dass die betreffende Abtriebswelle nach dem Abnehmen des Bearbeitungsgerätes oder Abdeckteiles nicht mehr rotiert.

Eine zusätzliche mechanische Einschaltsperre für den Antriebsmotor wird dadurch erreicht, dass an dem Sperrglied mindestens ein weiterer Hebelarm vorgesehen ist, welcher in der Ruhelage des Sperrgliedes im Verstellweg eines durch die Ein- und Ausschaltbewegung des Schalterbetätigungselementes verstellbaren Sperrklobens liegt und beim Verschwenken des Sperrgliedes den Verstellweg freigibt.

Anhand eines in der Zeichnung dargestellten Ausführungsbeispieles wird die Erfindung nachfolgend noch näher erläutert.

Es zeigen:
- Fig. 1: eine Küchenmaschine mit zwei Ankoppelstellen für Bearbeitungsgeräte,
- Fig. 2: die Anordnung einer die Schaltkontakte tragenden Platine im Bereich einer Ankoppelstelle der Küchenmaschine in Draufsicht,
- Fig. 3: die Anordnung einer die Schaltkontakte tragenden Platine im Bereich einer Ankoppelstelle der Küchenmaschine im Schnitt und
- Fig. 4: die Ankoppelung eines Sperrklobens an einem Schalterbetätigungselement.

Mit 1 ist das Gehäuse einer Küchenmaschine bezeichnet. Auf den waagerechten Sokkelteil 2 dieses Gehäuses 1 ist eine Rührschüssel 3 aufgesetzt. Das Sockelteil 2 bildet somit eine Ankoppelstelle für ein Bearbeitungsgerät oder Abdeckteil. Die Rührschüssel 3 weist in ihrer Mitte einen Hohlstutzen 4 auf, durch den eine von dem im senkrecht verlaufenden Gehäuseteil 5 des Gehäuses 1 eingebauten Antriebsmotor 6 angetriebene erste Abtriebswelle 7 hindurchgeführt ist. Die erste Abtriebswelle 7 weist eine Verbindungsstelle 8 für Bearbeitungswerkzeuge auf, die sich in einem auf die eine Ankoppelstelle aufsetzbaren Bearbeitungsgerät befinden. Mit ihrem freien Ende ist die erste Abtriebswelle 7 in einer am Deckel 9 der Rührschüssel 3 vorgesehenen Lageraufnahme 10 gelagert. An dem Deckel 9 ist eine nach radial außen weisende Lasche 11 angeformt, die durch eine Verschwenkbewegung des Deckels 9 in einen an dem senkrechten Gehäuseteil 5 vorgesehenen waagerechten Schlitz 12 eingeschwenkt werden kann.

An der Oberseite des senkrecht verlaufenden Gehäuseteiles 5 ist eine Aufnahmemulde 13 ausgebildet. In diese Aufnahmemulde 13 ragt das mit einer Ankoppelmöglichkeit für ein Bearbeitungswerkzeug versehene Ende 14 einer zweiten Abtriebswelle 15, die im vorliegenden Falle die Verlängerung der Motorwelle des Antriebsmotors 6 darstellt. In die Aufnahmemulde 13 kann ein Bearbeitungsgerät oder ein Abdeckteil mit seinem Sockel eingesteckt werden, wobei dann das Ende 14 der zweiten Abtriebswelle 15 mit dem Bearbeitungswerkzeug des Bearbeitungsgerätes in Antriebsverbindung kommt. Die Aufnahmemulde 13 bildet somit die andere Ankoppelstelle der Küchenmaschine für entsprechende Bearbeitungsgeräte.

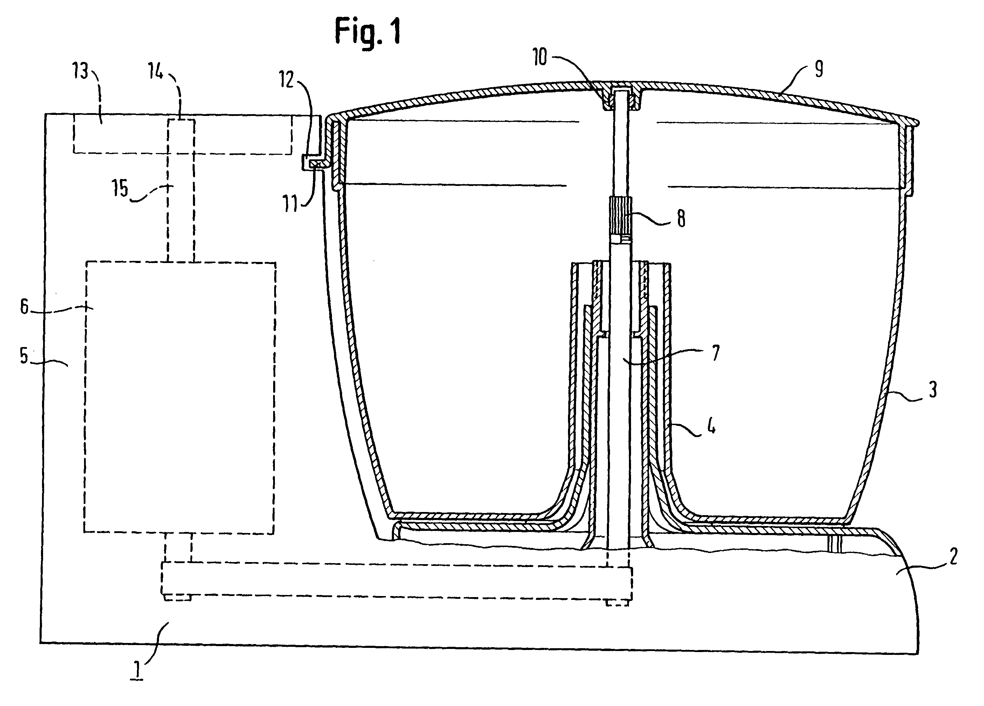

Ist bei der in Fig. 1 dargestellten Küchenmaschine nur an einer oder keiner der beiden Ankoppelstellen ein Bearbeitungsgerät oder Abdeckteil aufgesetzt, dann sind zumindest die Enden der beiden Abtriebswellen 7 und 15 frei zugänglich. Damit kann es leicht zu Verletzungen kommen, wenn die Enden der Abtriebswellen 7 und 15 bei eingeschaltetem Antriebsmotor 6 berührt werden. Um solche Verletzungsmöglichkeiten auszuschließen, ist die Küchenmaschine mit einer entsprechenden Sicherheitseinrichtung ausgerüstet, die nachfolgend beschrieben wird.

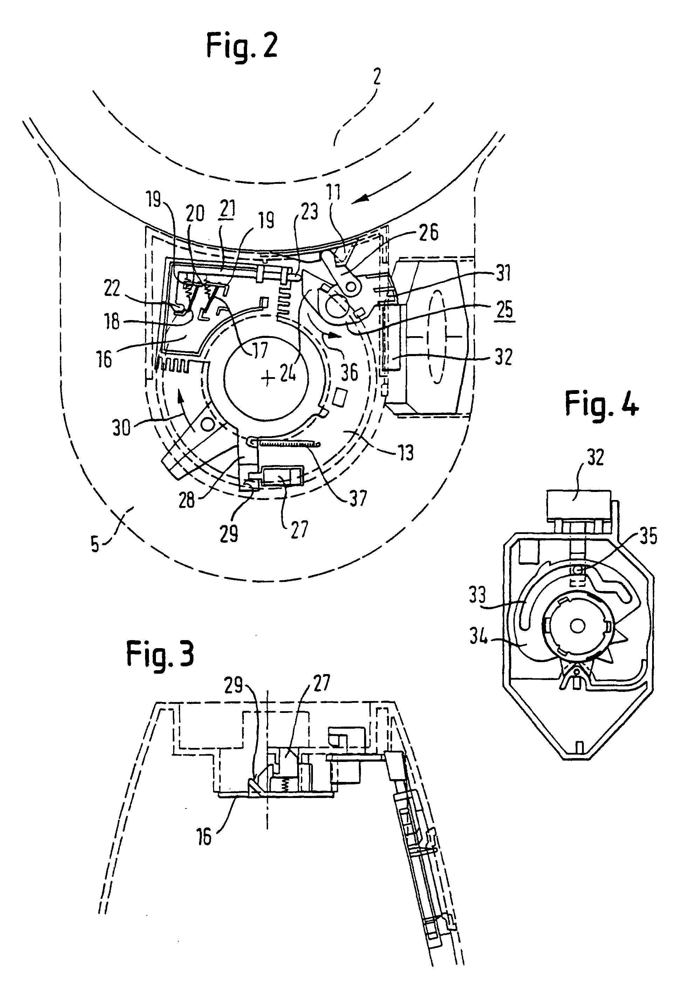

An einer auf einer rohrstutzenartigen Verlängerung des Gehäuses des Antriebsmotors 6 verdrehbar angeordneten Platine 16 sind zwei Schaltkontakte 17 und 18 angebracht. Diese Schaltkontakte 17 und 18 sind mit ihrem einen Ende an winkelförmigen Haltern 19 der Platine 16 befestigt. Über Federelemente 20 sind die Schaltkontakte 17 und 18 an einen Schaltstößel 21 angekoppelt, der mit seinem einen Ende 22 verschwenkbar an der Platine 16 befestigt ist. Das andere Ende 23 des Schaltstößels 21 ragt in den Verschwenkweg des einen Hebelarmes 24 eines Sperrgliedes 25, das verschwenkbar angeordnet ist und durch die Lasche 11 des Deckels 9 der Rührschüssel 3 verschwenkt werden kann. Hierzu ist an dem Sperrglied 25 ein in den Verschwenkweg der Lasche 11 ragender Betätigungsarm 26 vorgesehen. In Fig. 2 ist das Sperrglied 25 in seiner verschwenkten Stellung gezeigt, in der der eine Hebelarm 24 an dem Schaltstößel 21 anliegt. In dieser Stellung ist der eine Schaltkontakt 17 schon in seine Schließstellung umgeschaltet.

Beim Aufsetzen eines Bearbeitungsgerätes oder Abdeckteiles auf die andere Ankoppelstelle (Aufnahmemulde 13) wird ein Zwischenglied 27, welches auf einer an einem Verschwenkarm 28 der Platine 16 vorgesehenen Anlaufschräge 29 aufruht, gegen diese Anlaufschräge 29 gedrückt. Dabei gleitet das senkrecht verstellbare Zwischenglied 27 an der Anlaufschräge 29 entlang und verschwenkt dadurch die Platine 16 in der durch einen Pfeil 30 gekennzeichneten Richtung. Da der Schaltstößel 21 mit seinem anderen Ende 23 an dem einen Hebelarm 24 des Sperrgliedes 25 abgestützt ist und daher nicht ausweichen kann, wird der Schaltstößel 21 an seinem einen an der Platine 16 festgelegten Ende 22 verstellt. Diese Verstellbewegung führt zu einem Umschalten des anderen Schaltkontaktes 18 in seine Schließstellung. In Fig. 2 ist diese Schließstellung des anderen Schaltkontaktes 18 gezeigt. Da beide Schaltkontakt 17 und 18 elektrisch in Reihe liegen, ist durch deren Schließzustand eine elektrische Verbindung zum Antriebsmotor 6 gegeben. Wird nun noch der im Stromkreis des Antriebsmotors 6 liegende Schalter, der mit den beiden Schaltkontakten 17 und 18 ebenfalls elektrisch in Reihe geschaltet ist, eingeschaltet, kann der Antriebsmotor 6 anlaufen. Da die Schaltkontakte 17 und 18 nur durch Aufsetzen eines Bearbeitungsgerätes oder Abdeckteiles auf die jeweilige Ankoppelstelle 2 bzw. 13 in ihre Schließstellung geschaltet werden können, ist sicher gestellt, dass die beiden mit den Abtriebswellen 7 und 15 versehenen Ankoppetstellen 2 und 13 bei laufendem Antriebsmotor 6 immer abgedeckt sind.

Es sind ferner Elemente vorgesehen durch die sowohl auf den Schaltstößel 21 als auch auf die Platine 16 eine diese in ihre Ruhelage zurückdrängende bzw. zurückstellende Kraft ausgeübt wird. An die Platine 16 ist beispielsweise eine Feder 37 angekoppelt, welche die Platine 16, sobald diese durch Abnehmen eines an der anderen Ankoppelstelle 13 aufgesetzten Bearbeitungsgerätes oder Abdeckteiles für eine Rückstellbewegung freigegeben wird, in ihre Ausgangslage zurückschwenkt. Dies gilt auch für den Schaltstößel 21, der bei einem Zurückschwenken des einen Hebelarmes 24 des Sperrgliedes 25 durch die von dem betreffenden Element ausgehende Rückstellkraft in seine Ausgangsstellung zurückkehrt. Das Sperrglied 25 kann mit einer Rückstellfeder versehen sein, die das Sperrglied 25 zurückschwenkt, wenn durch das Wegschwenken der Lasche 11 der Rückschwenkweg freigegeben wird. Mit dem Rückstellen des Schaltstößels 21 bzw. dem Rückschwenken der Platine 16 ist jeweils ein Umschalten der Schaltkontakte 17 und 18 in ihre Offenstellung verbunden. Damit wird der Stromkreis des Antriebsmotors 6 unterbrochen, so dass die Abtriebswellen 7 und 15 beim Abnehmen eines Bearbeitungsgerätes oder Abdeckteiles von der jeweiligen Ankoppelstelle 2 bzw. 13 sofort zum Stillstand kommen.

Zusätzlich zu der auf elektrischem Wege bestehenden Sicherung ist noch eine mechanische Einschaltsperre für das Betätigungselement des im Stromkreis des Antriebsmotors 6 liegenden Schalters vorgesehen. Diese Einschaltsperre wird durch einen zweiten Hebelarm 31 des Sperrgliedes 25 erreicht. in der Ruhelage des Sperrgliedes 25, in der dieses nicht durch die Lasche 11 des Deckels 9 verschwenkt ist, liegt der weitere Hebelarm 31 senkrecht über einem Sperrkloben 32. Dieser Sperrkloben 32 ist mittels eines mit ihm verbundenen und in den Kulissenschlitz 33 einer Kulissenscheibe 34 eingreifenden Zapfens 35 formschlüssig an die Kulissenscheibe 34 angekoppelt. Mit der Kulissenscheibe 34 ist ein, den im Stromkreis des Antriebsmotors 6 liegenden Schalter betätigender Schaltknebel, der in der Zeichnung nicht dargestellt ist, drehfest verbunden. Wird der Schaltknebel zum Einschalten des Antriebsmotors 6 verdreht, dann wird gleichzeitig auch die Kulissenscheibe 34 verdreht. Über den in dem Kulissenschlitz 33 gleitenden Zapfen 35 wird der Sperrkloben 32 angehoben. Ein solches Anheben ist aber nur möglich, wenn der weitere Hebelarm 31 des Sperrgliedes 25 seitlich weggeschwenkt ist, also nicht mehr in den Verstellweg des Sperrklobens 32 ragt. Dies ist aber nur dann der Fall, wenn auf die eine Ankoppelstelle (Sockelteil 2) eine mittels des Deckels 9 verschließbare Rührschüssel 3 aufgesetzt ist. Dann wird nämlich das Sperrglied 25 über die Lasche 11 in der durch einen Pfeil 36 gekennzeichneten Richtung verschwenkt, wodurch der weitere Hebelarm 31 den Verstellweg des Sperrklobens 32 freigibt.

Die Platine 16 kann mit den Schaltkontakten 17 und 18 sowie dem Schaltstößel 21 als gesondertes Teil hergestellt und gehandhabt werden. Somit ist die räumliche Anordnung der Schaltkontakte 17 und 18 nicht mehr von gerätespezifischen Gegebenheiten abhängig. Außerdem fallen dadurch für die Sicherheitseinrichtung wesentlich geringere Montage- und Fertigungskosten an.

## Patentansprüche

1. Küchenmaschine mit zwei an ihrem Gehäuse räumlich beabstandet angeordneten Ankoppelstellen (2 und 13) für Bearbeitungsgeräte, wobei an jeder Ankoppelstelle (2 bzw. 13) eine vom Antriebsmotor (6) der Küchenmaschine angetriebene Abtriebswelle (7 bzw. 15) vorgesehen ist, bei welcher Küchenmaschine ferner an deren Gehäuse (1) ein mit einem im Stromkreis des Antriebsmotors (6) liegenden Schalter gekoppeltes Betätigungselement vorgesehen ist, **dadurch gekennzeichnet , dass** zusätzlich zu dem Schalter im Stromkreis des Antriebsmotors (6) wenigstens zwei in Reihe liegende Schaltkontakte (17 und 18) vorgesehen sind, von denen der eine direkt oder indirekt durch das Aufsetzen eines Bearbeitungsgerätes oder Abdeckteiles auf die eine Ankoppelstelle (2) und der andere Schaltkontakt direkt oder indirekt durch das Aufsetzen eines Bearbeitungsgerätes oder eines Abdeckteiles auf die andere Ankoppelstelle (13) in seine Schließstellung umschaltbar ist.

2. Küchenmaschine nach Anspruch 1, **dadurch gekennzeichnet , dass** die beiden Schaltkontakte (17 und 18) auf einer verschwenkbaren, durch Krafteinwirkung in ihrer Ruhelage gehaltenen Platine (16) angeordnet sind, auf welche Platine (16) beim Aufsetzten eines Bearbeitungsgerätes oder Abdeckteiles auf die eine oder andere Ankoppelstelle (2 bzw. 13) eine die Umschaltung des einen oder anderen Schaltkontaktes (17 bzw. 18) bewirkende Verschwenkbewegung ausgeübt ist.

3. Küchenmaschine nach Anspruch 2, **dadurch gekennzeichnet, dass** die beiden Schaltkontakte (17 und 18) mit einem Schaltstößel (21) gekoppelt sind, der mit seinem einen Ende (22) an der Platine (16) festgelegt ist und auf dessen anderes Ende (23) beim Aufsetzen eines Bearbeitungsgerätes oder Abdeckteiles auf die eine oder andere Ankoppelstelle eine Schaltbewegung ausgeübt ist.

4. Küchenmaschine nach Anspruch 1,2 oder 3, **dadurch gekennzeichnet, dass** an der einen Ankoppelstelle (2) eine Rührschüssel (3) aufsetzbar ist, an deren Deckel (9) als Verstellorgan eine nach radial außen ragende Lasche (11) ausgebildet ist, die durch eine entsprechende Drehbewegung des Deckels (9) in einen an einem senkrecht verlaufenden Gehäuseteil der Küchenmaschine vorgesehenen Schlitz (12) einschwenkbar ist, welche Lasche (11) direkt oder indirekt auf den Schaltstößel (21) der beiden Schaltkontakte (17 und 18) im Sinne einer Umschaltung des einen Schaltkontaktes (17 bzw. 18) einwirkt.

5. Küchenmaschine nach Anspruch 4, **dadurch gekennzeichnet, dass** im Inneren des Gehäuses(1) benachbart zu dem Schlitz (12) ein mindestens einen Hebelarm (24) aufweisendes durch die Lasche (11) verschwenkbares Sperrglied (25) angeordnet ist, dessen Hebelarm (24) auf den Schaltstößel (21) einwirkt.

6. Küchenmaschine nach Anspruch 4 oder 5, **dadurch gekennzeichnet, dass** die Platine (16) beim Aufsetzen eines Bearbeitungsgerätes oder Abdeckteiles auf die andere Ankoppelstelle (13) verschwenkt ist.

7. Küchenmaschine nach Anspruch 6, **dadurch gekennzeichnet, dass** direkt an der Platine (16) oder an einem mit dieser verbundenen Teil (27) eine Anlaufschräge (29) vorgesehen ist, auf die beim Aufsetzen eines Bearbeitungsgerätes oder Abdeckteiles eine Verschwenkkraft ausgeübt ist.

8. Küchenmaschine nach Anspruch 7, **dadurch gekennzeichnet, dass** ein auf der Anlaufschräge (29) aufruhendes Zwischenglied (27) vorgesehen ist, welches beim Aufsetzen des Bearbeitungsgerätes oder des Abdeckteiles niederdrückbar ist.

9. Küchenmaschine nach Anspruch 2, **dadurch gekennzeichnet, dass** die Platine (16) durch eine Feder (37) in ihrer Ruhrlage gehalten ist.

10. Küchenmaschine nach einem der vorhergehenden Ansprüche, **dadurch gekennzeichnet, dass** an dem Sperrglied (25) mindestens ein weiterer Hebelarm (31) vorgesehen ist, welcher in der Ruhelage des Sperrgliedes (25) im Verstellweg eines durch die Ein- und Ausschaltbewebung des Schalterbetätigungselementes verstellbaren Sperrklobens (32) liegt und beim Verschwenken des Sperrgliedes (25) den Verstellweg freigibt.

## Claims

1. Kitchen machine with two coupling points (2 and 13), which are arranged at a physical spacing in the housing of the machine, for processing apparatus, wherein a drive shaft (7 or 15) driven by the drive motor (6) of the kitchen machine is provided at each coupling point (2 or 13), in which kitchen machine in addition an actuating element coupled with a switch disposed in the current circuit of the drive motor (6) is provided at the machine housing (1), **characterised in that** in addition to the switch in the current circuit of the drive motor (6) at least two switch contacts (17 and 18) disposed in series are provided, of which one is switchable over into its closed setting directly or indirectly by placing of a processing apparatus or cover part on one coupling point (2) and the other switch contact is switchable over into its closed setting directly or indirectly by placing a processing apparatus or a cover part on the other coupling point (13).

2. Kitchen machine according to claim 1, **characterised in that** the two switch contacts (17 and 18) are arranged on a pivotable plate (16) kept in its rest position by force effect, on which plate (16) there is exerted a pivot movement, which causes switching over of one or the other switch contact (17 or 18), when a processing apparatus or cover part is placed on one or the other coupling point (2 or 13).

3. Kitchen machine according to claim 2, **characterised in that** the two switch contacts (17 and 18) are coupled with a switch plunger (21), which is fixed by one end (22) thereof to the plate (16) and on the other end (23) of which a switching movement is exerted when a processing apparatus or cover part is placed on one or the other coupling point.

4. Kitchen machine according to claim 1, 2 or 3, **characterised in that** a mixer bowl (3) is placeable at the one coupling point (2), at the cover (9) of which bowl a radially outwardly projecting strap (11) as adjusting element is formed and is pivotable by a corresponding rotational movement of the cover (9) into a slot (12) provided at a vertically extending housing part of the kitchen machine, which strap (11) directly or indirectly acts on the switching plunger (21) of the two switch contacts (17 and 18) in the sense of a switching over of the one switch contact (17 or 18).

5. Kitchen machine according to claim 4, **characterised in that** a blocking element (25) having at least one lever arm (24) and pivotable by the strap (11) is arranged in the interior of the housing (1) adjacent to the slot (12), the lever arm (24) of which element acts on the switching plunger (21).

6. Kitchen machine according to claim 4 or 5, **characterised in that** the plate (16) is pivoted when a processing apparatus or cover part is placed on the other coupling point (13).

7. Kitchen machine according to claim 6, **characterised in that** an entry chamfer (29), on which a pivotation force is exerted when a processing apparatus or cover part is placed on, is provided directly at the plate (16) or at a part (27) connected therewith.

8. Kitchen machine according to claim 7, **characterised in that** an intermediate element (27), which rests on the entry chamfer (29) and which can be pressed down when the processing apparatus or the cover part is placed on, is provided.

9. Kitchen machine according to claim 2, **characterised in that** the plate (16) is held in its rest position by a spring (37).

10. Kitchen machine according to one of the preceding claims, **characterised in that** at least one further lever arm (31), which in the rest position of the blocking element (25) lies in the adjustment path of a blocking block (32) adjustable by the switching-on and switching-off movement of the switch actuating element and which releases the adjustment path on pivotation of the blocking element (25), is provided at the blocking element (25).

## Revendications

1. Robot de cuisine comprenant deux points de couplage (2 et 13) placés à distance sur son carter pour des appareils de traitement, un arbre de sortie (7 resp. 15) entraîné par le moteur d'entraînement (6) du robot de cuisine étant prévu sur chaque point de couplage (2 resp. 13), dans lequel robot de cuisine un élément d'actionnement couplé à un commutateur situé dans le circuit électrique du moteur d'entraînement (6)est en outre prévu sur son carter (1), **caractérisé en ce que,** en plus du commutateur dans le circuit électrique du moteur d'entraînement (6), au moins deux contacts de commutation (17 et 18) placés en série sont prévus, dont l'un des contacts de commutation est commutable directement ou indirectement en posant un appareil de traitement ou une pièce de recouvrement sur l'un des points de couplage (2), et l'autre contact de commutation de commande est commutable directement ou indirectement dans sa position de fermeture en posant un appareil de traitement ou une pièce de recouvrement sur l'autre point de couplage (13).

2. Robot de cuisine selon la revendication 1, **caractérisé en ce que** les deux contacts de commutation (17 et 18) sont disposés sur une platine (16) pivotante, maintenue dans sa position de repos par effet de force, sur laquelle platine (16) un mouvement de pivotement entraînant la commutation de l'un ou de l'autre contact de commutation de commande (17 resp. 18) est exercé lorsque l'on pose un appareil de traitement ou une pièce de recouvrement sur l'un ou l'autre des points de couplage (2 resp. 13).

3. Robot de cuisine selon la revendication 2, **caractérisé en ce que** les deux contacts de commutation (17 et 18) sont couplés à un coulisseau de commutation (21) fixé sur la platine (16) au moyen de l'une de ses extrémités, et sur l'autre extrémité (23) duquel un mouvement de commutation est exercé lorsque l'on pose un appareil de traitement ou une pièce de recouvrement sur l'un ou l'autre des points de couplage.

4. Robot de cuisine selon la revendication 1, 2 ou 3, **caractérisé en ce qu'**un bol mélangeur (3) peut être posé sur l'un des points de couplage (2), sur le couvercle (9) duquel une languette (11) dépassant radialement vers l'extérieur est formée comme organe de réglage, qui, par un mouvement de rotation correspondant du couvercle (9), peut être pivotée dans une fente (12) prévue sur une pièce perpendiculaire du carter du robot de cuisine, laquelle languette (11) agit directement ou indirectement sur le coulisseau de commutation (21) des deux contacts de commutation (17 et 18) au sens d'une commutation de l'un des contacts de commutation (17 resp. 18).

5. Robot de cuisine selon la revendication 4, **caractérisé en ce qu'**un organe de blocage (25) pivotant au moyen de la languette (11) présentant au moins un bras de levier (24) est disposé à l'intérieur du carter (1) de manière adjacente à la fente (12), organe dont le bras de levier (24) agit sur le coulisseau de commutation (21).

6. Robot de cuisine selon la revendication 4 ou 5, **caractérisé en ce que** la platine ( 16) est pivotée lorsque l'on pose un appareil de traitement ou une pièce de recouvrement sur l'autre point de couplage (13).

7. Robot de cuisine selon la revendication 6, **caractérisé en ce qu'**une butée inclinée (29) est prévue directement sur la platine (16) ou sur une pièce (27) raccordée à celle-ci, sur laquelle une force pivotante est exercée lorsque l'on pose un appareil de traitement ou une pièce de recouvrement.

8. Robot de cuisine selon la revendication 7, **caractérisé en ce qu'**un organe intermédiaire (27) reposant sur la butée inclinée (29) est prévu, cet organe pouvant être enfoncé lorsque l'on pose un appareil de traitement ou une pièce de recouvrement.

9. Robot de cuisine selon la revendication 2, **caractérisé en ce que** la platine (16) est maintenue dans sa position de repos par un ressort (37).

10. Robot de cuisine selon l'une des revendications précédentes, **caractérisé en ce qu'**au moins un autre bras de levier (31) est prévu sur l'organe de blocage (25), lequel bras, dans la position de repos de l'organe de blocage (25), est situé dans la course de réglage d'un piston de blocage, (32) réglable par le mouvement de mise en et hors circuit de l'élément d'actionnement du commutateur, et qui libère la course de réglage lors du pivotement de l'organe de blocage (25).
